# EUROPÄISCHE PATENTSCHRIFT

(11) **EP 0 780 265 B1**
(45) Veröffentlichungstag und Bekanntmachung des Hinweises auf die Patenterteilung: **24.10.2001**
(21) Anmeldenummer: 96119519.5
(22) Anmeldetag: 05.12.1996
(51) Int. Cl.: B60Q 1/30, B60Q 1/26, F21V 8/00

(54) **Rückleuchte für Fahrzeuge, vorzugsweise Kraftfahrzeuge**
Vehicle rear light
Feu arrière pour véhicule

(30) Priorität: 21.12.1995 DE 19547861
(43) Veröffentlichungstag der Anmeldung: 25.06.1997
(73) Patentinhaber: REITTER & SCHEFENACKER GmbH & Co. KG, D-73730 Esslingen (DE)
(72) Erfinder: Zwick, Hubert, 70184 Stuttgart (DE); Müller, Otto, 73347 Mühlhausen (DE); Berlitz, Stephan, 86551 Aichach (DE)
(74) Vertreter: Jackisch-Kohl, Anna-Katharina

(56) Entgegenhaltungen:
- EP-A- 0 453 092
- DE-A- 19 613 211
- FR-A- 2 370 342
- US-A- 4 389 085
- US-A- 5 434 754

## Beschreibung

Die Erfindung betrifft eine Rückleuchte für Fahrzeuge, vorzugsweise für Kraftfahrzeuge, nach dem Oberbegriff des Anspruches 1.

Es sind Rückleuchten bekannt, bei denen als Lichtquelle eine Glühlampe vorgesehen ist, deren Lichtstrahlen von einem Reflektor zur Lichtscheibe reflektiert werden. Aufgrund der Glühlampe hat die Rückleuchte eine verhältnismäßig große Tiefe, so daß entsprechend große Einbauräume am Fahrzeug vorgesehen sein müssen. Es ist erheblicher Aufwand erforderlich, die Lichtscheibe gleichmäßig großflächig auszuleuchten.

Bei einer gattungsgemäßen Rückleuchte (US-A 5 434 754) wird Licht über ein seitliches Lichtleitrohr zu einem Reflektor geleitet. Er reflektiert die Strahlen zu Reflexionsflächen, an denen sie zur Lichtscheibe reflektiert werden. Die Lichtquelle befindet sich außerhalb des Gehäuses der Rückleuchte, so daß ein konstruktiver Aufwand notwendig ist, um die Lichtstrahlen durch die Lichtscheibe nach außen zu bringen.

Der Erfindung liegt die Aufgabe zugrunde, die gattungsgemäße Rückleuchte zu verbessern, wobei sie bei flacher Ausbildung eine gleichmäßige großflächige Ausleuchtung der Lichtscheibe ermöglicht.

Diese Aufgabe wird bei der gattungsgemäßen Rückleuchte erfindungsgemäß mit den kennzeichnenden Merkmalen des Anspruches 1 gelöst.

Bei der erfindungsgemäßen Rückleuchte befindet sich im Strahlbereich zwischen der Lichtquelle und der Lichtscheibe der Lichtleitkörper. Er besteht aus Lichtleitermaterial und leitet das von der Lichtquelle ausgesandte Licht hervorragend. Vorteilhaft kann als Lichtquelle eine LED verwendet werden, die nur eine geringe Bauhöhe hat und sich nur wenig erwärmt. Das von ihr ausgesandte Licht wird durch den Lichtleitkörper optimal verteilt auf die Lichtscheibe reflektiert. Sie kann darum gleichmäßig und großflächig ausgeleuchtet werden. infolge des Lichtleitkörpers kann die erfindungsgemäße Rückleuchte sehr flach gebaut werden, so daß zum Einbau der Rückleuchte nur ein entsprechend kleiner Einbauraum am Fahrzeug erforderlich ist. Das von der Lichtquelle ausgesandte Licht tritt in den Vorsprung ein und trifft auf die zweite Reflexionsfläche. An ihr werden die Lichtstrahlen zur ersten Reflexionsfläche reflektiert, welche die Lichtstrahlen zur Lichtscheibe lenkt.

Die Erfindung wird anhand eines in den Zeichnungen dargestellten Ausführungsbeispieles näher erläutert. Es zeigen
- Fig. 1: in einem Querschnitt eine erfindungsgemäße Rückleuchte eines Kraftfahrzeuges,
- Fig. 2: im Längsschnitt die erfindungsgemäße Rückleuchte des Kraftfahrzeuges,
- Fig. 3: einen Lichtleitkörper der erfindungsgemäßen Rückleuchte in vergrößerter Darstellung.

Die Rückleuchte hat ein Gehäuse 1, das in eine Einbauöffnung 2 eines Kraftfahrzeuges in bekannter Weise eingesetzt und gehalten ist. Das Gehäuse 1 ist an einer Seite offen, die durch eine Lichtscheibe 3 geschlossen ist. An der Rückseite des Gehäuses 1 befindet sich ein Reflektor 4 für eine Glühlampe 5. Sie sitzt in einer Fassung 6, die an einer vom Reflektor 4 in Richtung auf die Lichtscheibe 3 abstehenden Wand 7 vorgesehen ist. In der Einbaulage der Rückleuchte verläuft die Wand 7 horizontal. Das von der Glühlampe 5 ausgesandte Licht gelangt teilweise unmittelbar zur Lichtscheibe 3 und tritt durch diese nach außen aus. Ein anderer Teil wird vom Reflektor 4 in bekannter Weise zur Lichtscheibe 3 reflektiert.

In Höhe der Glühlampe 5 befindet sich an der Rückseite der Lichtscheibe 3 innerhalb des Gehäuses 1 ein Rückstrahler 8. Er ist in bekannter Weise ausgebildet und kann eingefärbt sein, beispielsweise in einem roten Farbton. Der Rückstrahler 8 kann an der Lichtscheibe 3 in bekannter Weise befestigt sein. Auf der der Glühlampe 5 zugewandten Seite ist der Rückstrahler 8 mit einer lichtundurchlässigen Abdeckung 9 versehen, so daß das von der Glühlampe 5 ausgesandte Licht nicht von hinten durch den Rückstrahler 8 nach außen gelangen kann.

Die Glühlampe 5 sitzt innerhalb einer Kammer 10, die nach unten durch eine Zwischenwand 11 von einer weiteren Kammer 12 getrennt ist. Die Zwischenwand 11 ist vorteilhaft einstückig mit dem Gehäuse 1 ausgebildet. Der Reflektor 4 ist ein vom Gehäuse 1 gesondertes Bauteil, das von der Rückseite der Rückleuchte aus in eine Öffnung 13 des Gehäuses 1 eingesetzt und in bekannter Weise unter Zwischenlage wenigstens einer Dichtung 14 befestigt wird.

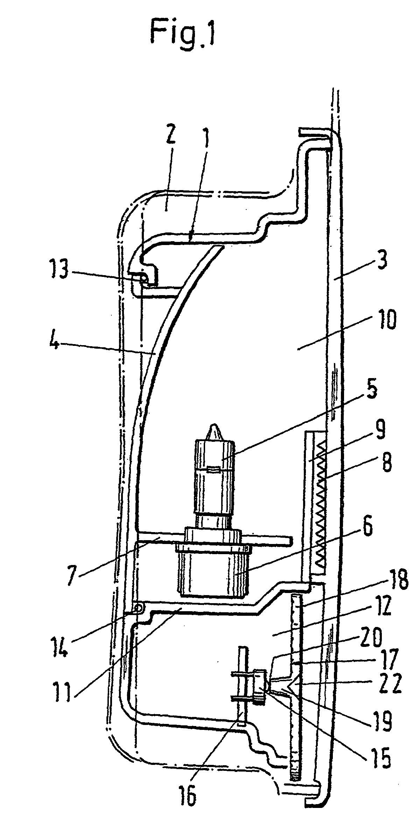

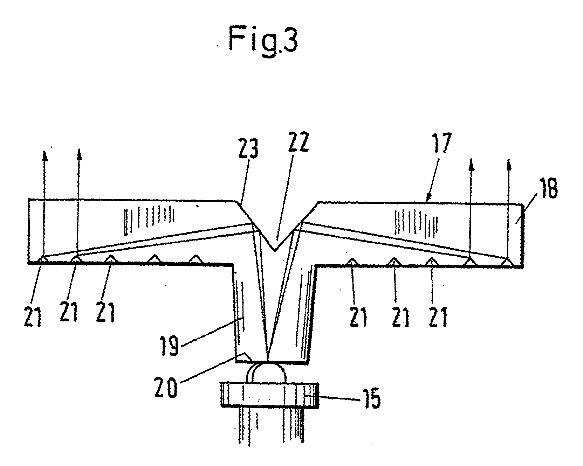

Die Kammer 12 liegt in der Einbaulage der Rückleuchte unterhalb der Kammer 10. Wie Fig. 1 zeigt, hat die untere Kammer 12 wesentlich geringere Höhe als die obere Kammer 10. In der unteren Kammer 12 ist mindestens ein Lichtkörper 15 in Form einer LED untergebracht. Vorteilhaft sind mehrere LEDs 15 in horizontaler Richtung mit Abstand hintereinander an einer hochkant stehenden Platine 16 befestigt. Sie ist vorteilhaft an der Innenseite des Gehäuses 1 gehalten. Zwischen den LEDs 15 und der Lichtscheibe 3 befindet sich eine der Zahl der LEDs 15 entsprechende Zahl von Lichtleiterkörpern 17, die aus Lichtleitermaterial bestehen, das vorzugsweise aus Kunststoff hergestellt ist. Derartiges Lichtleitermaterial ist an sich bekannt. Der Lichtleiterkörper 16 hat einen kreisförmigen Plattenteil 18, der mit Abstand hinter der Lichtscheibe 3 in der unteren Kammer 12 untergebracht ist. Der Plattenteil 18 erstreckt sich im wesentlichen über die gesamte Höhe der Kammer 12 und hat vorteilhaft konstante Dicke. An der von der Lichtscheibe 3 abgewandten Unterseite steht mittig vom Plattenteil 18 ein Ansatz 19 ab, der sich in Richtung auf die LEDs 15 vorteilhaft verjüngt. Wie die Fig. 1 und 3 zeigen, liegt der Ansatz 19 mit einer ebenen Unterseite 20 an der LED 15 an. Der Ansatz 19 hat kreisförmigen Querschnitt. Im Bereich neben dem Ansatz 19 sind in der Unterseite des Plattenteiles 18 mit Abstand voneinander Reflexionsprismen 21 (Fig. 3) vorgesehen, an denen in noch zu beschreibender Weise Strahlen der LED 15 reflektiert werden. Die Reflexionsprismen 21 sind durch die Wandungen von im Querschnitt kreisförmigen Vertiefungen in der Unterseite des Plattenteiles 18 gebildet, die im Bereich zwischen dem Ansatz 19 und dem Umfang des Plattenteiles gleichmäßig verteilt angeordnet sind.

Auf der der Lichtscheibe 3 zugewandten Seite ist der Plattenteil 18 in Höhe des Ansatzes 19 mit einer im Querschnitt kreisförmigen Vertiefung 22 versehen. Die Vertiefung 22 ist so ausgebildet, daß die von der LED 15 ausgesandten Lichtstrahlen auf eine Reflexionsfläche 23 treffen, welche die Seitenwand der Vertiefung 22 bildet. Die Reflexionsfläche 23 ist als Kegelfläche ausgebildet und vorteilhaft verspiegelt. Wie Fig. 3 zeigt, erstreckt sich die Vertiefung 22 bis nahe an den Ansatz 19, zu dem sie mittig liegt. Die Reflexionsfläche 23 schließt stumpfwinklig an die der Lichtscheibe 3 zugewandte Oberseite des Plattenteiles 18 an.

In Fig. 3 ist der Strahlenverlauf angegeben. Das von der LED 15 ausgesandte Licht tritt an der ebenen Unterseite 20 in den Ansatz 19 ein und trifft auf die Reflexionsfläche 23. An ihr werden die Lichtstrahlen in Richtung auf die Reflexionsprismen 21 reflektiert. Sie haben ebenfalls kegelförmige Reflexionsflächen, an denen die Lichtstrahlen zur Oberseite des Plattenteiles 18 reflektiert werden. Hier treten die Lichtstrahlen aus dem Plattenteil 18 aus und können durch die Lichtscheibe 3 aus dem Gehäuse 1 gelangen. Da die von der LED 15 ausgesandten Strahlen divergierend verlaufen, werden die einzelnen Lichtstrahlen an der Reflexionsfläche 23 unter unterschiedlichen Winkeln reflektiert. Die Reflexionsprismen 21 sind so angeordnet, daß die an der Reflexionsfläche 23 reflektierten Lichtstrahlen auf sie gelangen und in Richtung auf die Oberseite des Plattenteiles 18 bzw. auf die Lichtscheibe 3 reflektiert werden. Auf diese Weise wird erreicht, daß das von der LED 15 ausgesandte Licht gleichmäßig über die Fläche des Plattenteiles 18 austritt.

Da der Plattenteil 18 des Lichtleiterkörpers 17 dünn ausgebildet sein kann und auch der Ansatz 19 nur eine geringe Höhe hat, ergibt sich eine sehr flach bauende Rückleuchte, die nur wenig Einbauraum benötigt. Die beschriebene Ausbildung des Lichtleiterkörpers 17 ergibt eine große, gleichmäßig leuchtende Fläche, für die nur wenige LEDs erforderlich sind. Dadurch kann die Leuchte auch kostengünstig gefertigt werden.

Die Reflexionsprismen 21 werden vorteilhaft durch Seitenwände von Vertiefungen gebildet, die in der Unterseite des Plattenteiles 18 vorgesehen sind. Die Reflexionsflächen sind ebenfalls vorteilhaft verspiegelt. Es ist auch möglich, anstelle der Vertiefungen 21 die Unterseite des Plattenteiles 18 so auszubilden, daß die an der Reflexionsflächen 23 reflektierten Strahlen an dieser Unterseite eine Totalreflexion erfahren.

Anstelle der LEDs als Lichtkörper 15 können selbstverständlich auch andere geeignete Lichtquellen mit ähnlichem Abstrahlverhalten eingesetzt werden. Die LEDs 15 haben den Vorteil, daß nur eine verhältnismäßig geringe Erwärmung eintritt. Die LEDs sprechen sehr schnell an, was insbesondere bei Verwendung als Brems- und Blinklicht von großem Vorteil ist. Darüber hinaus hat die Verwendung mehrerer LEDs den Vorteil, daß ein Totalausfall des entsprechenden Lichtes nicht auftreten kann. Fällt eine der LEDs 15 aus, bleiben die anderen LEDs weiterhin in Betrieb.

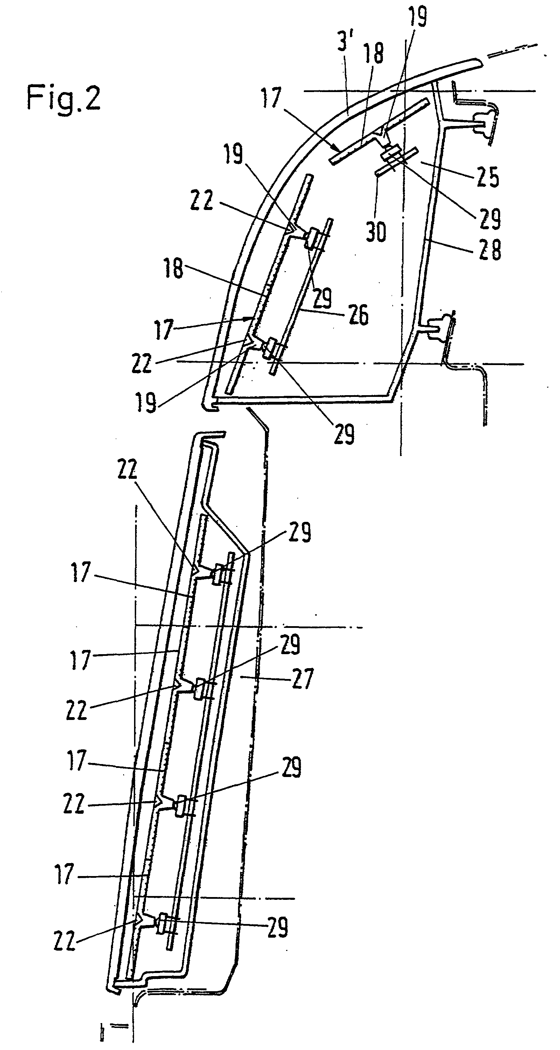

Fig. 2 zeigt die komplette Rückleuchte des Kraftfahrzeuges mit einem Blinklicht 25, einem Schlußlicht 26 und einem Bremslicht 27. Alle drei Lichter sind in ähnlicher Weise ausgebildet, wie anhand von Fig. 1 erläutert worden ist. Das Blinklicht 25 und das Schlußlicht 26 sind in einem Gehäuse 28 untergebracht, das in bekannter Weise im Einbauraum des Kraftfahrzeuges befestigt ist. Das Blinklicht 25 hat einen Lichtkörper 29, vorzugsweise eine LED, die auf einer Platine 30 vorgesehen ist. Sie ist in geeigneter Weise im Gehäuse 28 befestigt. Am Lichtkörper 29 liegt der Ansatz 19 des Lichtleitkörpers 17 an, wie anhand der Fig. 1 und 3 erläutert worden ist. Das von der LED 29 ausgesandte Licht wird in der beschriebenen Weise vom Lichtleitkörper 17 zur Lichtscheibe 3' reflektiert.

Für das Blinklicht 25 können selbstverständlich mehrere LEDs 29 oder entsprechende Lichtquellen verwendet werden. Ist nur eine LED 29 vorgesehen, ist nur ein Lichtleitkörper 17 mit dem Ansatz 19 versehen. Bei mehreren LEDs 29 ist eine entsprechende Zahl von Lichtleitkörpern 17 vorgesehen.

Beim Schlußlicht 26 sind zwei aneinanderliegende Lichtleitkörper 17 mit den Ansätzen 19 vorgesehen. Diese Lichtleitkörper 17 sind gleich ausgebildet wie beim Ausführungsbeispiel nach den Fig. 1 und 3.

Für das Bremslicht 27 sind im dargestellten Ausführungsbeispiel vier Lichtleitkörper 17 verwendet worden, die aneinander liegen und die eine Ausbildung entsprechend den Fig. 1 und 3 haben. Jedem Lichtleitkörper 17 ist in der beschriebenen Weise ein Lichtkörper 29, vorzugsweise eine LED, zugeordnet. Anstelle der Verwendung von vier Lichtleitkörpern 17 ist es auch möglich, einen entsprechend langen Lichtleitkörper einzusetzen, der beispielsweise rechteckigen Umriß haben kann. Anstelle der einzelnen Vertiefungen 22 kann dieser Lichtleitkörper eine über die Länge durchgehende Vertiefung haben. Auch die Lichtleitkörper 17 der anderen Lichter 25, 26 können entsprechend länglich-rechteckig ausgebildet sein.

## Patentansprüche

1. Rückleuchte für Fahrzeuge, vorzugsweise Kraftfahrzeuge, mit einem Gehäuse (1, 28), mit mindestens einer Lichtquelle (15, 29) und mit einer lichtdurchlässigen Lichtscheibe (3, 3'), wobei zwischen der Lichtquelle (15, 29) und der Lichtscheibe (3, 3') wenigstens ein Lichtleitkörper (17) angeordnet ist, der mittels wenigstens einer ersten Reflexionsfläche (21) das von der Lichtquelle (15, 29) ausgesandte Licht zur Lichtscheibe (3, 3') reflektiert und aus Lichtleitermaterial besteht, wobei der Lichtleitkörper (17) einen Plattenteil (18) aufweist, von dem wenigstens ein in Richtung auf die Lichtquelle (15, 29) ragender Vorsprung (19) absteht, der eine der Lichtquelle (15, 29) benachbarte Endfläche (20) aufweist, und daß dem Vorsprung (19) mindestens eine zweite Reflexionsfläche (23) für das von der Lichtquelle (15, 29) ausgesandte Licht zugeordnet ist,
**dadurch gekennzeichnet, daß** die Lichtquelle (15, 29) im Gehäuse (1, 28) und hinter der Lichtscheibe (3, 3') angeordnet ist.

2. Rückleuchte nach Anspruch 1,
**dadurch gekennzeichnet, daß** der Lichtleitkörper (17) und der Vorsprung (19) einstückig miteinander ausgebildet sind.

3. Rückleuchte nach Anspruch 1 oder 2,
**dadurch gekennzeichnet, daß** die Lichtquelle (15, 29) eine LED ist.

4. Rückleuchte nach Anspruch 2 oder 3,
**dadurch gekennzeichnet, daß** der Vorsprung (19) mittig vom Plattenteil (18) absteht, und daß der vorzugsweise kreisförmigen Querschnitt aufweisende Vorsprung (19) in Richtung auf die Lichtquelle (15, 29) stetig verjüngt ausgebildet ist.

5. Rückleuchte nach einem der Ansprüche 2 bis 4,
**dadurch gekennzeichnet, daß** die dem Vorsprung (19) zugeordnete zweite Reflexionsfläche (23) an der vom Vorsprung (19) abgewandten Seite des Plattenteiles (18) liegt und die Wandung einer Vertiefung (22) im Plattenteil ist.

6. Rückleuchte nach Anspruch 5,
**dadurch gekennzeichnet, daß** die Vertiefung (22) kreisförmigen Querschnitt hat, und daß die Tiefe der Vertiefung (22) vorzugsweise geringer ist als die Dicke des Plattenteiles (18).

7. Rückleuchte nach einem der Ansprüche 1 bis 6,
**dadurch gekennzeichnet daß** der Plattenteil (18) des Lichtleitkörpers (17) an der den Vorsprung (19) aufweisenden Seite die erste Reflexionsfläche (21) aufweist, die vorzugsweise die Wandungen von Vertiefungen in der Plattenteilseite sind und im Strahlweg der dem Vorsprung (19) zugeordneten zweiten Reflexionsfläche (23) reflektierten Strahlen liegt.

8. Rückleuchte nach Anspruch 7,
**dadurch gekennzeichnet, daß** die erste Reflexionsfläche (21) die Strahlen in Richtung auf die Lichtscheibe (3, 3') reflektiert.

9. Rückleuchte nach einem der Ansprüche 1 bis 8,
**dadurch gekennzeichnet, daß** der Plattenteil (18) des Lichtleitkörpers (17) kreisförmigen Querschnitt hat.

10. Rückleuchte nach einem der Ansprüche 5 und 6 bis 9,
**dadurch gekennzeichnet, daß** sich die Vertiefung (22) geradlinig erstreckt.

## Claims

1. A rear lamp unit for vehicles, preferably motor vehicles, having a housing (1, 28), having at least one light source (15, 29) and having a translucent light glass (3, 3'), at least one light-conducting body (17) being arranged between the light source (15, 29) and the light glass (3, 3'), which light-conducting body (17) reflects to the light glass (3, 3'), by means of at least one first reflecting surface (21), the light emitted by the light source (15, 29) and is composed of light-conductive material, the light-conducting body (17) having a plate part (18) from which there protrudes at least one projection (19) which projects in the direction of the light source (15, 29) and which has an end face (20) adjacent to the light source (15, 29), and at least one second reflecting surface (23) for the light emitted by the light source (15, 29) being associated with the projection (19), **characterised in that** the light source (15, 29) is arranged in the housing (1, 28) and behind the light glass (3, 3').

2. A rear lamp unit according to Claim 1, **characterised in that** the light-conducting body (17) and the projection (19) are integral with one another.

3. A rear lamp unit according to Claim 1 or 2, **characterised in that** the light source (15, 29) is a LED.

4. A rear lamp unit according to Claim 2 or 3, **characterised in that** the projection (19) protrudes from the centre of the plate part (18), and **in that** the projection (19), preferably of circular cross-section, tapers continuously in the direction of the light source (15, 29).

5. A rear lamp unit according to any one of Claims 2 to 4, **characterised in that** the second reflecting surface (23) associated with the projection (19) lies at the side, of the plate part (18), remote from the projection (19) and is the wall of a recess (22) in the plate part.

6. A rear lamp unit according to Claim 5, **characterised in that** the recess (22) has a circular cross-section, and **in that** the depth of the recess (22) is preferably less than the thickness of the plate part (18).

7. A rear lamp unit according to any one of Claims 1 to 6, **characterised in that** the plate part (18) of the light-conducting body (17) has the first reflecting surface (21) on its side having the projection (19), which reflecting surfaces (21) are preferably the walls of cavities in the plate part side and lie in the beam path of the beams reflected [by the] reflecting surface (23) associated with the projection (19).

8. A rear lamp unit according to Claim 7, **characterised in that** the first reflecting surface (21) reflects the beams in the direction of the light glass (3, 3').

9. A rear lamp unit according to any one of Claims 1 to 8, **characterised in that** the plate part (18) of the light-conducting body (17) has a circular cross-section.

10. A rear lamp unit according to any one of Claims 5 and 6 to 9, **characterised in that** the recess (22) extends rectilinearly.

## Revendications

1. Feu arrière pour véhicules, de préférence pour véhicules automobiles, comprenant un boîtier (1, 28), au moins une source lumineuse (15, 29) et une plaque d'éclairement (3, 3') translucide, dans lequel entre la source lumineuse (15, 29) et la plaque d'éclairement (3, 3') est agencé au moins un corps de guidage de lumière (17) qui, au moyen d'au moins une première surface de réflexion (21), réfléchit vers la plaque d'éclairement (3, 3') la lumière émise par la source de lumière (15, 29) et qui est constitué par un matériau de guidage de lumière, le corps de guidage de lumière (17) présentant une partie en plaque (18) dont au moins une saillie (19) se dresse en direction de la source lumineuse (15, 29), laquelle présente une surface d'extrémité (20) voisine de la source lumineuse (15, 29) et en ce qu'à la saillie (19) est associée au moins une deuxième surface de réflexion (23) pour la lumière émise par la source lumineuse (15, 29), **caractérisé en ce que** la source lumineuse (15, 29) est agencée dans le boîtier (1, 28) et derrière la plaque d'éclairement (3, 3').

2. Feu arrière selon la revendication 1, **caractérisé en ce que** le corps de guidage de lumière (17) et la saillie (19) sont réalisés d'une seule pièce l'un avec l'autre.

3. Feu arrière selon l'une ou l'autre des revendications 1 et 2, **caractérisé en ce que** la source lumineuse (15, 29) est une diode électroluminescente.

4. Feu arrière selon l'une ou l'autre des revendications 2 et 3, **caractérisé en ce que** la saillie (19) se dresse au milieu depuis la partie en plaque (18) et **en ce que** la saillie (19), qui présente de préférence une section transversale de forme circulaire, est réalisée en se rétrécissant en continu en direction de la source lumineuse (15, 29).

5. Feu arrière selon l'une quelconque des revendications 2 à 4, **caractérisé en ce que** la deuxième surface de réflexion (23) associée à la saillie (19) se trouve sur la face détournée de la saillie (19), de la partie en plaque (18), et **en ce qu'**elle est formée par la paroi d'une encoche (22) dans la partie en plaque.

6. Feu arrière selon la revendication 5, **caractérisé en ce que** l'encoche (22) a une section transversale de forme circulaire et **en ce que** la profondeur de l'encoche (22) est de préférence inférieure à l'épaisseur de la partie en plaque (18).

7. Feu arrière selon l'une quelconque des revendications 1 à 6, **caractérisé en ce que** la partie en plaque (18) du corps de guidage de lumière (17) présente, sur le côté qui comporte la saillie (19), la première surface de réflexion (21) qui est formée de préférence par les parois d'encoches dans le côté de la plaque et qui est située dans la trajectoire de rayonnement des rayons réfléchis par la deuxième surface de réflexion (23) associée à la saillie (19).

8. Feu arrière selon la revendication 7, **caractérisé en ce que** la première surface de réflexion (21) réfléchit les rayons en direction de la plaque d'éclairement (3, 3').

9. Feu arrière selon l'une quelconque des revendications 1 à 8, **caractérisé en ce que** la partie en plaque (18) du corps de guidage de lumière (17) a une section transversale de forme circulaire.

10. Feu arrière selon l'une quelconque des revendications 5 et 6 à 9, **caractérisé en ce que** l'encoche (22) s'étend en ligne droite.
